# EUROPEAN PATENT APPLICATION

(11) **EP 1 184 955 A1**
(43) Date of publication of application: **06.03.2002**
(21) Application number: 00118740.0
(22) Date of filing: 30.08.2000
(51) Int. Cl.: H02J 13/00

(54) **A system for transmitting information, particularly between domestic appliances, over a power distribution network**

(71) Applicant: WHIRLPOOL CORPORATION, Benton Harbor Michigan 49022 (US)
(72) Inventor: Chiriatti, Antonio, Whirlpool Europe S.r.l., 21025 Comerio (IT)
(74) Representative: Guerci, Alessandro

(57) **Abstract**

A system for transmitting information over a power distribution network, particularly for transmitting information between domestic appliances and/or one or more domestic appliances and a remote controller, exploits the frequency available on the power line as a reference for generating the timing signal for modulation / demodulation function.

## Description

The present invention relates to a system for transmitting information over a power distribution network, particularly with reference to transmission of data between domestic appliances and/or between one or more domestic appliances and one or more remote controllers.

There is a growing interest in using AC power line circuits as medium for intra-building communications. These circuits allow an easy connection through a wall plug. Today several products and standard protocols exist on the market claiming to surmount the technical problems associated to a communication on power line. Among such problems there are noise and interference, attenuation and impedance variation as well as the reflection associated to the medium. An additional problem to be addressed is the multiple access management on power line of different appliances being part of the house network as well as unwanted interference that can be caused by appliances of neighbour networks. For example the media access layer of CEBus employs carrier sensing multiple access with signals collision detection and signals collision resolution. US-A-4535447 discloses a remote monitoring transmitter including a multiplexer and an A/D converter in which the sampling clock is not synchronised and the signal is transmitted in the quiet part of the waveform. Some of such technologies for the mains physical layer (dedicated wires) use basically spread spectrum technologies (e.g. spread-spectrum carrier waveform by Intellon) or standard phase and frequency digital modulations. By using modem technology, in establishing a digital communication link, the information digits arriving in sequence are mapped into symbols (bit) that are in turn represented by proper electrical waveform over the link. At the receiving end, the received waveform is properly processed for making a decision on the transmitted symbol, which is then mapped back to information digits. For example if the modulation form is Frequency Shift Key (FSK) it uses two signal tones. In each bit interval, the modulator sends a pulse of one tone or the other in accordance with whether the information bit is 1 or 0.

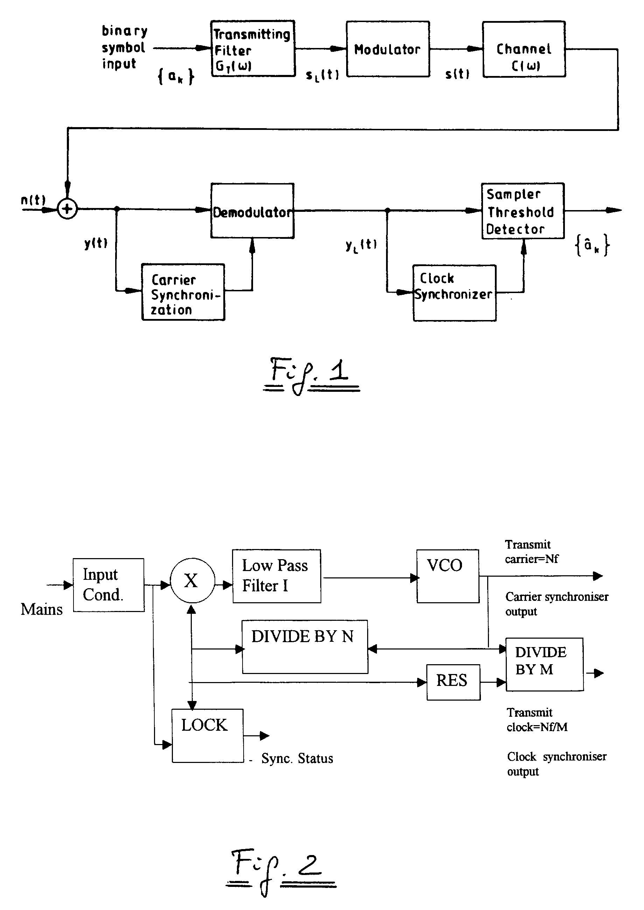

FSK can be demodulated coherently by correlating the received signal over each pulse interval with the two tones, sampling the results and selecting the larger of the two outputs. Digital transmission are disclosed in the publication "Synchronisation in digital communications" - pages 3-14, Heinrich Mayer, Gerd Ascheid, Wiley Series in Telecommunications, where a generic modem characterised by a transmitting filter, a modulator and a channel for the transmitting section is described. The receiving section consists of a demodulator with carrier synchronisation and a sampler threshold detector with a clock synchroniser. Figures 1 shows an example of carrier-modulated transmission link.

Another more sophisticated technology is spread spectrum technology that can be viewed as a two-layer modulation. There are two basics methods for implementing a spread spectrum system: Direct-Sequence Spread Spectrum and Frequency-Hopping Spread Spectrum. The spread-spectrum modulation system multiplies the information by a random carrier, whereas the standard modulation multiplies the signal by a sinusoidal carrier. The difference between the two layers of modulation is that the generation and synchronisation of random carrier are more complicated than sinusoidal carrier. Spread spectrum has attracted a considerable attention because of the Code Division Multiple Access (CDMA) intrinsic capability built on spread-spectrum transmission and reception. Therefore Spread spectrum signals can be overlaid onto bands where other systems are already operating, with minimal performance impact to or from the other systems. In a multi-user environment, several users can share the same bandwidth using spreading codes, which are orthogonal to one another (this feature is suitable to solve the unwanted interference problem of a neighbour network). A critical function for the proper operation of the despreading operations is the code/frame synchronisation. Despreading needs a synchronisation process before reliable data are available at the output.

The above modem devices are quite expensive and moreover they do not work properly if connected to power distribution networks. For the known systems of transmission using power distribution network reliability is still a critical issue and their cost is not sufficiently low so that they can be used in connection with high volume domestic appliances. The need of having domestic appliances electronically linked together or linked with a remote control is well known in the art of domestic appliances. It gives significant benefits, among the others: possibility of remote diagnostic, mains power limitation, remote control of such appliances (for instance for remotely controlling the conditions or the content of a refrigerator or for starting a washing cycle of a washing machine). The kind of electronic link devised up to now for domestic appliances has still problems of reliability and cost.

It is an object of the present invention to provide an improvement on current technologies for transmitting information over a power distribution network which is particularly fit for connecting appliances together or with a remote control and which allows higher reliability and lower cost.

In order to improve the link reliability and the access of the link operation on the power line the mains frequency voltage on the power line is used as reference for generating the timing signals for the modulation and demodulation function. In other words, according to the invention the mains timing available on the power line is used as reference for carrier synchronisation, clock synchronisation and for data transfer timing and spreading / de-spreading function in the case spread-spectrum technology is used.

Preferably the system comprises a phase locked system (PLL).

According to the present invention, synchronisation is always available and there is no synchronisation recovery time or a very fast one and a very low probability of false detection. Moreover the system provides improved data reliability due to the higher clock reliability, it has a low cost and does not need any complex signal processing. Another advantage of the system according to the present invention is the possibility to generate a lock signal representative of the synchronisation status.

The present invention will be better understood with reference to the appended drawings, provided as examples in which:
- Figure 1 is a generic block diagram of a known carrier-modulated transmission link;
- Figure 2 is a schematic block diagram of a system according to the invention for generating carrier frequency and clock frequency; it can be used both in the transmission and reception sections;
- Figure 3 is a schematic block diagram for implementing an improved carrier synchronisation and clock synchronisation;
- Figure 4 is a schematic block diagram of a simplified system according to the invention for frame and clock synchronisation;
- Figure 5 is a schematic block diagram of another embodiment of a simplified system according to the invention used only for clock generation and synchronisation.

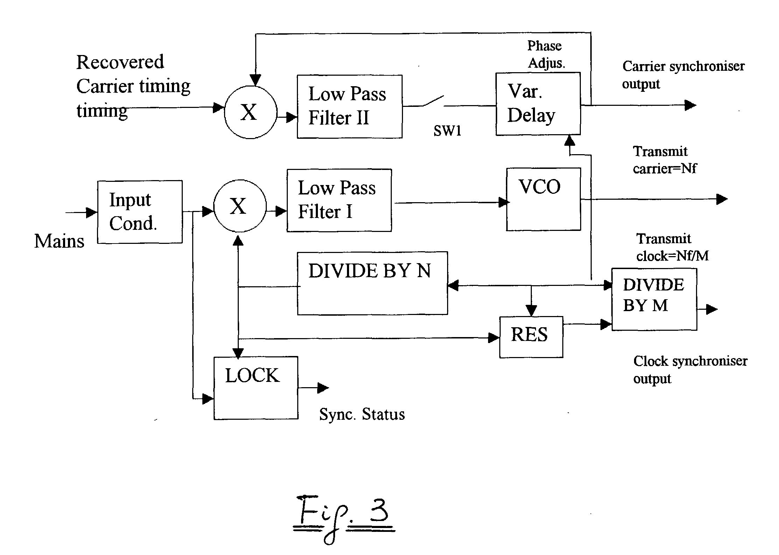

With reference to figure 2, a circuit for synthesising modulator carrier and clock frequencies is shown. Mains frequency is used as reference frequency. This general known technique is disclosed for instance in the publication "Phase-locked loops, theory, design and applications", pages 217 - 229, Dr. Roland E. Best, Mc Graw-Hill Book Company. Carrier frequency is N-times the clock frequency. By choosing N as a multiple of 3 the generated frequency does not depend on which phase of the network the circuit is connected to. The clock frequency is the output of a counter that divides by a coefficient M the carrier frequency. A reset circuit is used to set the desired clock phase with respect to the mains. Both frequencies can have any values by using the techniques described in the above publication "Phase-locked loops, theory, design and applications". According to the invention, the circuit shown in Figure 2 can also be used for implementing clock and carrier frequencies synchronisation in the receiving section.

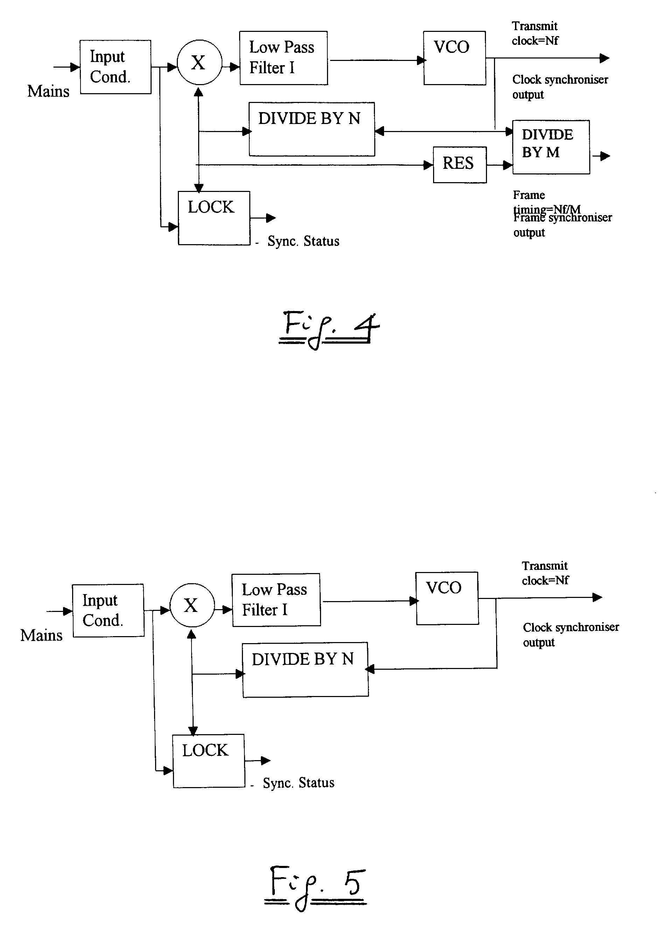

Figure 3 shows a block diagram of an improved version for generating the carrier and clock synchronisation function. In order to have a more accurate synchronisation for compensating the phase difference between the mains at receiving and transmitting sections or circuit tolerances, a further phase correction is included by adding a variable delay to the PLL output. The delay is controlled by the Low pass filtered output of a phase comparator to have the carrier synchroniser output in phase with the recovered carrier frequency (that can be generated according to one of the methods described in the referenced "Synchronisation in digital communications"). In figure 3 a switch SW1 is shown that is closed when a more accurate synchronisation is desired.

Figure 4 is a schematic block diagram of simplified system in which mains frequency is used for clock and frame synchronisation and figure 5 is a schematic block diagram of simplified system in which only a clock signal is generated as a direct multiple (N) of the frequency and there is no correction.

## Claims

1. A system for transmitting information over a power distribution network, particularly for transmitting information between domestic appliances and/or between one or more domestic appliances and one or more remote controllers, **characterised in that** the frequency available on the power line is used as reference for generating the timing signal for modulation / demodulation function.

2. A system according to claim 1, **characterised in that** power line frequency is used for generating the modulation / demodulation clock frequency.

3. A system according to claim 2, **characterised in that** in order to generate the clock frequency a phase locked loop circuit (PLL) is used.

4. A system according to claim 1, **characterised in that** the power line frequency is used for generating the modulation / demodulation carrier frequency by means of a phase locked loop circuit (PLL).

5. A system according to any of the preceding claims, **characterised in that** power line frequency is used as reference for generating the spreading / despreading frequency.

6. A system according to claims 3 and 4, **characterised in that** it comprises an accurate adjustment circuit by using the recovered carrier frequency or clock frequency in order to generate a correction.

7. A system according to any of the previous claims, **characterised in that** it comprises a transmitter section (T) that can work as receiving section (R) and vice-versa.

8. Domestic appliance including a system for transmitting information according to any of the previous claims.
